# EUROPÄISCHE PATENTANMELDUNG

(11) **EP 4 557 583 A1**
(43) Veröffentlichungstag der Anmeldung: **21.05.2025**
(21) Anmeldenummer: 24209739.2
(22) Anmeldetag: 30.10.2024
(51) Int. Cl.: H02K 3/52, H02K 5/22, H02K 5/24

(54) **ELEKTRISCHE MASCHINE MIT ANSCHLÜSSEN**

(30) Priorität: 14.11.2023 DE 102023211297
(71) Anmelder: Robert Bosch GmbH, 70442 Stuttgart (DE)
(72) Erfinder: Martinovic, Drazen, 70372 Stuttgart (DE); Oeppling, Kai, 71106 Magstadt (DE); Ruedinger, Stefan, 70563 Stuttgart (DE); Santhosh, H N, 560068 Bengaluru (IN); Harsh, Raj, 560100 Bengaluru (IN); Walther, Christoph, 71735 Eberdingen (DE); Schuetz, Eric, 3800-533 Cacia Aveiro (PT); Peter, Ralph, 74078 Heilbronn (DE); Schmidt, Alexander, 71686 Remseck Am Neckar (DE)

(57) **Zusammenfassung**

Eine elektrische Maschine (1), die einen Stator (2) mit einer mehrphasigen elektrischen Wicklung (3), die jeweils einen Phasenstrang (4a, 4b, 4c) aufweist und ein Gehäuse (5a, 5b) mit einer Öffnung (9) zur Durchführung einer elektrischen Anschlüsse aufweist. Jeweils ein elektrisch leitfähiges Anschlusselement (7a, 7b, 7c) ermöglicht den Anschluss der externen Energieversorgung, z.B. eines Inverters, über jeweils eines der Verbindungselemente (8a, 8b, 8c) bis zu einem Ende (6) eines der Phasenstränge (4a, 4b, 4c). Um einen Toleranz- oder Bewegungsausgleich zwischen dem Stator (2) und dem jeweiligen Anschlusselement (7a, 7b, 7c) zu erreichen, wird jedes der Anschlusselement (7a, 7b, 7c) "elastisch ausgebildet", z.B. über eine gebogene Form oder lamellenförmigen Leiterbändern. Zusätzlich wird in die Öffnung (9) des Gehäuses (5a, 5b) ein Abstützteil (10) zwischen jedes Anschlusselement (7a, 7b, 7c) und das Gehäuse (5,5b) als Schwingungsdämpfer geklemmt.

## Beschreibung

Die vorliegende Erfindung betrifft eine elektrische Maschine. Die elektrische Maschine weist insbesondere Verbesserungen hinsichtlich der Schwingungsfestigkeit interner elektrischer Leiter auf.

### Stand der Technik

Aus dem Stand der Technik ist bekannt, dass elektrische Maschine eigene Anschlusselemente aufweisen, die zum elektrischen Kontaktieren mit einem Inverter vorgesehen sind. Die Anschlusselemente können beispielsweise fest an einem Gehäuse der elektrischen Maschine angebracht sein. Dies dient zum einfachen und zuverlässigen Befestigen und elektrischen Kontaktieren von Anschlüssen des Inverters. Die Anschlusselemente sind über Verbindungselemente mit einer Wicklung der elektrischen Maschine verbunden. Die Verbindungselemente oder Anschlusselemente weisen zumindest flexibel ausgebildete Teilabschnitte auf, die dafür vorgesehen sind, einen Toleranzausgleich zwischen Wicklung und Anschlusselement vorzunehmen.

### Offenbarung der Erfindung

Die erfindungsgemäße elektrische Maschine weist eine verbesserte Schwingungsfestigkeit interner elektrischer Verbindungselemente auf. Insbesondere ist auf diese Weise die Gefahr von Schwingungsbrüchen von internen Verbindungselementen vermindert oder ausgeschlossen.

Die elektrische Maschine weist einen Stator mit einer mehrphasigen elektrischen Wicklung auf. Die Wicklung wiederum weist zumindest einen Phasenstrang auf. Vorteilhafterweise weist die elektrische Wicklung drei Phasenstränge auf. Der Stator ist innerhalb eines Gehäuses der elektrischen Maschine angeordnet. Das Gehäuse weist eine Öffnung zur Durchführung einer elektrischen Verbindung auf. Außerdem ist zumindest ein elektrisch leitfähiges Anschlusselement vorgesehen. Das Anschlusselement ist ausgebildet zum Anschließen eines der Phasenstränge an die Phase einer externen Energieversorgung. Bei der externen Energieversorgung kann es sich insbesondere um einen Inverter handeln. Es ist somit vorteilhafterweise vorgesehen, dass ein Anschlusselement pro Phasenstrang der Wicklung vorgesehen ist. Besonders vorteilhaft sind alle Anschlusselemente an dem Gehäuse angebracht oder fixiert. Das zumindest eine Anschlusselement befindet sich vorteilhafterweise auf einer anderen Seite des Gehäuses als der Stator.

Die elektrische Maschine weist weiterhin zumindest ein elektrisch leitfähiges Verbindungselement auf. Das Verbindungselement erstreckt sich zwischen einem Ende eines der Phasenstränge der Wicklung und dem Anschlusselement. Auf diese Weise verbindet das elektrisch leitfähige Verbindungselement den Phasenstrang mit dem Anschlusselement. Das Anschlusselement ist elastisch ausgebildet, um einen Toleranzausgleich und/oder Bewegungsausgleich zwischen dem Stator und dem Anschlusselement zu erreichen. Besonders vorteilhaft ist vorgesehen, dass für jeden Phasenstrang ein eigenes Anschlusselement sowie ein eigenes Verbindungselement vorgesehen ist. In dem o.g. beispielhaften Design mit drei Phasensträngen der elektrischen Wicklung sind somit drei Anschlusselemente und drei Verbindungselemente vorgesehen, wobei jeweils ein Phasenstrang über ein eigenes Verbindungselement mit einem separaten Anschlusselement elektrisch verbunden ist.

In einer besonders vorteilhaften Ausgestaltung führt das elektrisch leitfähige Verbindungselement durch die Öffnung des Gehäuses. Dies ermöglicht ein Anordnen von Stator- und Anschlusselementen auf unterschiedlichen Seiten des Gehäuses. Insbesondere lässt sich der Stator so durch das Gehäuse vor äußeren Einflüssen abschirmen.

Es ist weiterhin vorgesehen, dass das zumindest eine Anschlusselement und/oder das Verbindungselement mittels eines in der Öffnung des Gehäuses angeordneten Abstützteils schwingungsdämpfend abgestützt ist. Die Schwingungsdämpfung erfolgt vorteilhafterweise durch eine Erhöhung der Eigenfrequenz des Verbindungselements und/oder des Anschlusselements aufgrund des Abstützens an dem Gehäuse durch das Abstützteil. Alternativ oder zusätzlich wird durch das Abstützteil ein Schwingungsweg des Anschlusselements und/oder des Verbindungselements durch mechanisches Fixieren verringert. Die genannten Maßnahmen tragen dazu bei, die Schwingungsbeanspruchbarkeit des Anschlusselementes und/oder des Verbindungselements zu erhöhen. Die Gefahr von Schwingungsbrüchen des Anschlusselements und/oder des Verbindungselements ist dadurch reduziert oder vermieden.

Die Unteransprüche zeigen bevorzugte Weiterbildungen der Erfindung.

Bevorzugt weist das Abstützteil zumindest eine erste Stützkontur zum Abstützen des Anschlusselements und/oder des Verbindungselements auf. Die erste Stützkontur liegt an dem Anschlusselement und/oder Verbindungselement an und sorgt somit für besagte schwingungsdämpfende Abstützung. Vorteilhafterweise ist jeweils eine erste Stützkontur für jeweils ein Anschlusselement und/oder Verbindungselement vorgesehen. Die erste Stützkontur kann beispielsweise als Vorsprung oder als hervorstehender Arm ausgebildet sein.

Besonders bevorzugt weist das Abstützteil zumindest eine zweite Stützkontur auf. Die zweite Stützkontur ist zur Abstützung des Anschlusselements und/oder Verbindungselements ausgebildet. Die zweite Stützkontur ist gegenüberliegend der ersten Stützkontur ausgebildet. Das Anschlusselement und/oder das Verbindungselement sind vorteilhafterweise zwischen der ersten Stützkontur und der zweiten Stützkontur angeordnet. Besonders bevorzugt ist vorgesehen, dass das Anschlusselement und/oder das Verbindungselement zwischen der ersten Stützkontur und der zweiten Stützkontur eingeklemmt sind. Die zweite Stützkontur ist vorteilhafterweise analog zu der ersten Stützkontur ausgebildet. Somit ist die zweite Stützkontur vorteilhafterweise als Vorsprung und/oder als hervorstehender Arm ausgebildet. Die zweite Stützkontur und die erste Stützkontur können somit ein Verbindungselement und/oder Anschlusselement von zwei Seiten abstützen. Dies ist insbesondere vorteilhaft, wenn das Anschlusselement und/oder Verbindungselement als Flachleiter ausgebildet sind. Eine solche Ausbildung von Anschlusselement und/oder Verbindungselement ist eine vorteilhafte Ausführung der elektrischen Maschine.

Die erste Stützkontur und/oder die zweite Stützkontur weisen bevorzugt einen einfachen oder mehrfachen linienförmigen Kontakt zu dem jeweiligen Anschlusselement oder Verbindungselement auf. Dies ist insbesondere dadurch erreicht, dass die erste Stützkontur und/oder die zweite Stützkontur eine Wellenform und/oder eine Sägezahnform aufweisen, um mit dieser Form in Kontakt mit der jeweiligen Oberfläche von Anschlusselement und/oder Verbindungselement zu gelangen. Auf diese Weise ist insbesondere eine vollflächige Anlage der Stützkontur oder der Stützkonturen vermieden. Dadurch ist eine definierte Auflage des Abstützteils an dem Anschlusselement und/oder dem Verbindungselement erreicht.

Besonders vorteilhaft weist das Abstützteil eine dritte Stützkontur auf. Die dritte Stützkontur erstreckt sich nach außen und liegt an dem Gehäuse an. Unter einem Erstrecken nach außen ist insbesondere zu verstehen, dass sich die dritte Stützkontur von dem Anschlusselement und/oder von dem Verbindungselement weg erstreckt. Somit erfolgt ein Abstützen des Abstützteils gegenüber dem Gehäuse, wobei die Schwingungsdämpfung von Anschluss und/oder Verbindungselement dadurch optimiert ist.

Besonders vorteilhaft weist die dritte Stützkontur einen Linienkontakt zu dem Gehäuse auf. Der Linienkontakt kann einfach oder mehrfach ausgebildet sein. Wie zuvor beschrieben, ist besonders vorteilhaft eine Wellenform und/oder eine Sägezahnform vorgesehen, um den Kontakt zwischen der dritten Stützkontur und dem Gehäuse zu erreichen. Dies führt wiederum zu einer vorteilhaften definierten der dritten Stützkontur an dem Gehäuse.

Vorteilhafterweise weist das Abstützteil einen Grundkörper auf. Der Grundkörper ist insbesondere ringförmig oder C-förmig ausgebildet. Mit einer C-Form ist insbesondere eine offene Ringform gemeint, wobei die C-Form durch einen abgerundeten Körper und/oder durch mehrere zueinander abgewinkelte Segmente eines Körpers erreicht werden kann. Der Grundkörper umgibt das Anschlusselement und/oder das Verbindungselement zumindest teilweise. Es ist vorteilhafterweise vorgesehen, dass der Grundkörper einen ersten Schenkel, einen zweiten Schenkel und einen den ersten Schenkel und den zweiten Schenkel verbindenden dritten Schenkel aufweist. Der erste Schenkel und der zweite Schenkel weisen bevorzugt ein freies Ende auf, wobei diese Form vorteilhafterweise ein elastisches Aufbiegen von erstem Schenkel und zweitem Schenkel ermöglicht. Dadurch ist das Montieren des Abstützteils und/oder des Verbindungselements und/oder des Anschlusselements vereinfacht.

An dem ersten Schenkel ist bevorzugt die zumindest eine erste Stützkontur angebracht. An dem zweiten Schenkel ist bevorzugt die zuvor genannte zumindest eine zweite Stützkontur angebracht. Es ist vorteilhafterweise vorgesehen, dass an dem ersten Schenkel gleich viele erste Stützkonturen und dritte Stützkonturen angeordnet sind. Alternativ oder zusätzlich ist bevorzugt vorgesehen, dass an dem zweiten Schenkel gleich viele zweite Stützkonturen und dritte Stützkonturen angeordnet sind. Die dritten Stützkonturen erstrecken sich von dem ersten Schenkel bevorzugt in entgegengesetzte Richtungen wie die ersten Stützkonturen. Von dem zweiten Schenkel erstrecken sich die dritten Stützkonturen bevorzugt in entgegengesetzte Richtung wie die zweiten Stützkonturen. Auf diese Weise erfolgt eine zuverlässige Abstützung des zumindest einen Verbindungselements und/oder des zumindest einen Anschlusselements an dem Gehäuse, indem der Kraftfluss der Abstützung von der ersten Stützkontur über den ersten Schenkel und die dritte Stützkontur in das Gehäuse geleitet wird. In analoger Weise wird besagter Kraftfluss über die zweite Stützkontur und den zweiten Schenkel sowie einer weiteren dritten Stützkontur in das Gehäuse geleitet. Damit sind Schwingungen des Anschlusselements und/oder des Verbindungselements zuverlässig reduziert.

In einer vorteilhaften Ausgestaltung weist das Abstützteil zumindest eine vierte Stützkontur auf. Die vierte Stützkontur erstreckt sich von dem dritten Schenkel nach außen. Vorteilhafterweise liegt die vierte Stützkontur an dem Gehäuse an, besonders vorteilhaft über einen einfachen oder mehrfachen Linienkontakt. Der einfache oder mehrfache Linienkontakt wird insbesondere über eine Sägezahnform und/oder Wellenform der vierten Stützkontur erreicht. Besonders vorteilhaft erstrecken sich von dem dritten Schenkel keinerlei Stützkonturen nach innen, d.h., keinerlei Stützkonturen zu dem Anschlusselement und/oder Verbindungselement. Somit dient der dritte Schenkel, von dem sich die zumindest eine vierte Stützkontur erstreckt, lediglich der Verbindung des ersten Schenkels und zweiten Schenkels sowie dem Anordnen des Abstützteils innerhalb der Öffnung des Gehäuses.

Das Abstützteil ist vorteilhafterweise entlang einer Axialrichtung der elektrischen Maschine in die Öffnung des Gehäuses einsetzbar. Die Axialrichtung der elektrischen Maschine ist insbesondere die Axialrichtung des Rotors und/oder Stators der elektrischen Maschine. Die Axialrichtung verläuft insbesondere parallel zu einer Mittelachse von Rotor und/oder Stator der elektrischen Maschine. Das Abstützteil weist mindestens einen Axialanschlag auf, durch den in Axialrichtung eine Endposition des Abstützteils in dem Gehäuse definiert ist. Eine Montage des Abstützteils ist somit einfach und aufwandsarm möglich. Auch ist das Abstützteil zuverlässig innerhalb der Öffnung angeordnet.

Das Verbindungselement ist vorteilhafterweise Teil einer Leiterschiene. Die Leiterschiene verschaltet Leiterstränge der Wicklung 3 miteinander. Die Wicklung 3 ist vorteilhafterweise durch U-förmige und/oder I-förmige Leiterstücke gebildet, deren Enden durch die Leiterschiene zu der Wicklung miteinander verschaltet sind. Besonders vorteilhaft ist durch jeweils eine Leiterschiene ein Phasenstrang der Wicklung verschaltet. Somit ist bei Vorhandensein mehrerer Verbindungselemente jedes Verbindungselement Teil einer eigenen Leiterschiene.

Das Abstützteil ist vorteilhafterweise elektrisch isolierend ausgebildet. Besonders vorteilhaft ist das Abstützteil aus einem elektrisch isolierenden Material gefertigt. Auf diese Weise ist ein Kurzschluss der einzelnen Phasenstränge der Wicklung durch das Abstützteil ausgeschlossen.

Das Anschlusselement weist bevorzugt einen Kontaktabschnitt zur elektrischen Kontaktierung der Phase der externen Energieversorgung und einen Flexabschnitt zur elastischen Verbindung mit dem Verbindungselement auf. Der Flexabschnitt weist im Querschnitt bevorzugt eine Vielzahl von Litzen oder eine Vielzahl von Lamellenbändern auf. Der Kontaktabschnitt weist im Querschnitt insbesondere ein einzelnes Leiterband oder eine Vielzahl von Lamellenbändern auf. Durch derartige Ausgestaltungen ist insbesondere erreicht, dass der Flexabschnitt eine Flexibilität erlaubt. Der Kontaktabschnitt hingegen ist robust und erlaubt eine zuverlässige Kontaktierung externer Komponenten.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: eine schematische Ansicht einer elektrischen Maschine gemäß einem Ausführungsbeispiel der Erfindung,
- Figur 2: eine schematische Schnittansicht durch die elektrische Maschine gemäß dem Ausführungsbeispiel der Erfindung,
- Figur 3: eine schematische Detailansicht der Schnittansicht durch die elektrische Maschine gemäß dem Ausführungsbeispiel der Erfindung,
- Figur 4: eine schematische Detailansicht einzelner Komponenten der elektrischen Maschine gemäß dem Ausführungsbeispiel der Erfindung, und
- Figur 5: eine schematische Detailansicht eines Abstützteils der elektrischen Maschine.

### Ausführungsformen der Erfindung

Bevorzugt sind alle gleichen Bauteile, Elemente und/oder Einheiten in allen Figuren mit den gleichen Bezugszeichen versehen.

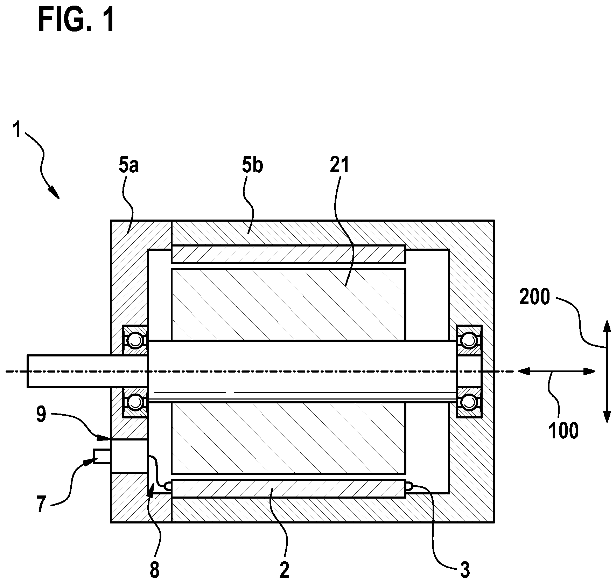

Figur 1 zeigt schematisch eine elektrische Maschine 1 gemäß einem Ausführungsbeispiel der Erfindung. Die elektrische Maschine 1 weist einen Stator 2 mit einer elektrischen Wicklung 3 auf, wobei in Figur 1 lediglich schematisch Wickelköpfe der Wicklung 3 gezeigt sind. Durch den Stator 2 ist ein Rotor 21 antreibbar.

Der Stator 2 ist in einem Gehäuse 5a, 5b befestigt, wobei das Gehäuse 5a, 5b ein Topfelement 5b und ein das Topfelement 5b verschließendes Deckelelement 5a aufweist. In dem Deckelelement 5a ist eine Öffnung 9 zum Durchführen einer elektrischen Verbindung vorgesehen. Auf diese Weise ist ermöglicht, ein Anschlusselement 7 außerhalb des Gehäuses 5a, 5b vorzusehen, um die Wicklung 3 des Stators 2 innerhalb des Gehäuses 5a, 5b elektrisch zu kontaktieren. Ein Verbindungselement 8 verbindet das Anschlusselement 7 mit der Wicklung 3.

Entlang einer Mittelachse des Stators 2 und/oder Rotors 21 ist eine Axialrichtung 100 definiert. Senkrecht dazu ist eine Radialrichtung 200 definiert. Die Öffnung 9 erstreckt sich beispielsweise in Axialrichtung 100 durch das Gehäuse 5a, 5b.

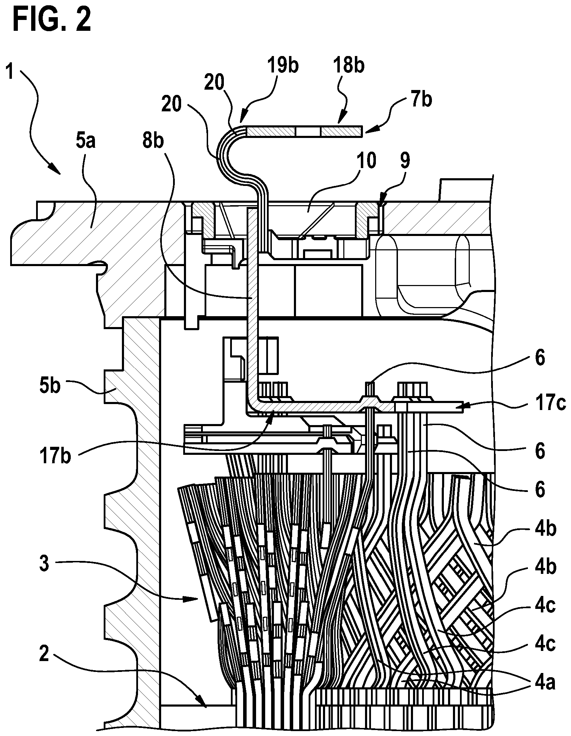

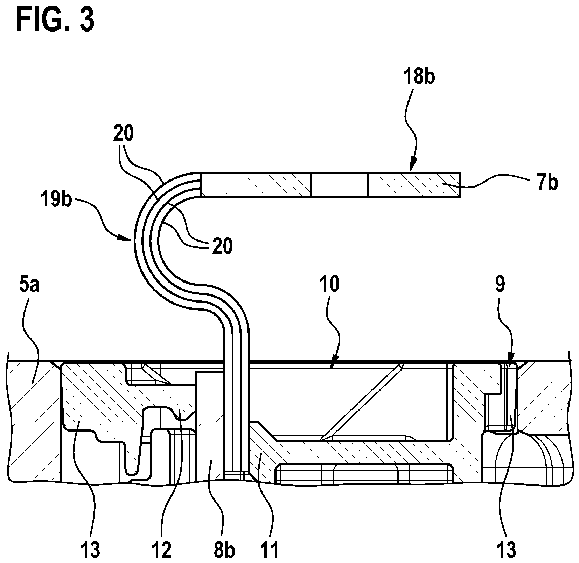

Figur 2 zeigt schematisch eine Schnittansicht durch die elektrische Maschine 1. Figur 3 zeigt eine Detailansicht dieser Schnittansicht.

Die elektrische Wicklung 3 des Stators 2 weist insgesamt drei Phasenstränge 4a, 4b, 4c auf. Der Stator 2 ist somit dreiphasig ausgebildet. Somit sind drei elektrisch leitfähige Anschlusselemente 7a, 7b, 7c vorhanden, ein erstes Anschlusselement 7a, ein zweites Anschlusselement 7b und ein drittes Anschlusselement 7c, wobei in der Schnittansicht gemäß Figur 2 lediglich das zweite Anschlusselement 7b sichtbar ist. Jedes Anschlusselement 7a, 7b, 7c ist mit jeweils einem Verbindungselement 8a, 8b, 8c elektrisch verbunden, einem ersten Verbindungselement 8a, einem zweiten Verbindungselement 8b und einem dritten Verbindungselement 8c, wobei in Figur 2 aufgrund der Schnittansicht lediglich das zweite Verbindungselement 8b sichtbar ist. Jedes Verbindungselement 8a, 8b, 8c ist Teil einer Leiterschiene 17a, 17b, 17c, einer ersten Leiterschiene 17a, einer zweiten Leiterschiene 17b und einer dritten Leiterschiene 17c, wobei in Figur 2 lediglich die zweite Leiterschiene 17b und die dritte Leiterschiene 17c sichtbar sind. Die Leiterschienen 17a, 17b, 17c dienen dazu, Enden 6 der einzelnen Phasenstränge 4a, 4b, 4c elektrisch zu kontaktieren. Die Wicklung 3 ist insbesondere aus U-förmigen oder I-förmigen Leiterelementen zusammengesetzt. Die Leiterschienen 17a, 17b, 17c sind zum Verschalten dieser einzelnen Leiterelemente ausgebildet.

Die Verbindungselemente 8a, 8b, 8c sind mechanisch und elektrisch mit den Anschlusselementen 7a, 7b, 7c verbunden. Dabei weisen die Anschlusselemente 7a, 7b, 7c jeweils einen Kontaktabschnitt 18a, 18b, 18c zur elektrischen Kontaktierung einer Phase einer externen Energieversorgung auf. Bei der externen Energieversorgung handelt es sich beispielsweise um einen Inverter. Weiterhin weisen die Anschlusselemente 7a, 7b, 7c jeweils einen Flexabschnitt 19a, 19b, 19c auf. Der Flexabschnitt 19a, 19b, 19c ist beispielsweise durch eine Vielzahl von Lamellenbändern 20 gebildet. Das Anschlusselement 7a, 7b, 7c, insbesondere der Flexabschnitt 19a, 19b, 19c ist jeweils elastisch ausgebildet, um einen Toleranzausgleich und/oder einen Bewegungsausgleich zwischen dem Stator 2 und dem Anschlusselement 7a, 7b, 7c, insbesondere dem Kontaktabschnitt 18a, 18b, 18c des jeweiligen Anschlusselements 7a, 7b, 7c, zu erreichen.

Um unerwünschte Schwingungen der Anschlusselemente 7a, 7b, 7c und/oder der Verbindungselemente 8a, 8b, 8c zu vermeiden, ist in der Öffnung 9 ein Abstützteil 10 angeordnet. Das Abstützteil 10 dient zum schwingungsdämpfenden Abstützen von Anschlusselement 7a, 7b, 7c und/oder Verbindungselement 8a, 8b, 8c. Beispielsweise erfolgt ein Abstützen in Radialrichtung 200. Auf diese Weise ist die Gefahr von Schwingungsbrüchen des Anschlusselements 7a, 7b, 7c und/oder des Verbindungselements 8a, 8b, 8c, besonders vorteilhaft des Flexabschnitts 19a, 19b, 19c des jeweiligen Anschlusselementes 7a, 7b, 7c, minimiert.

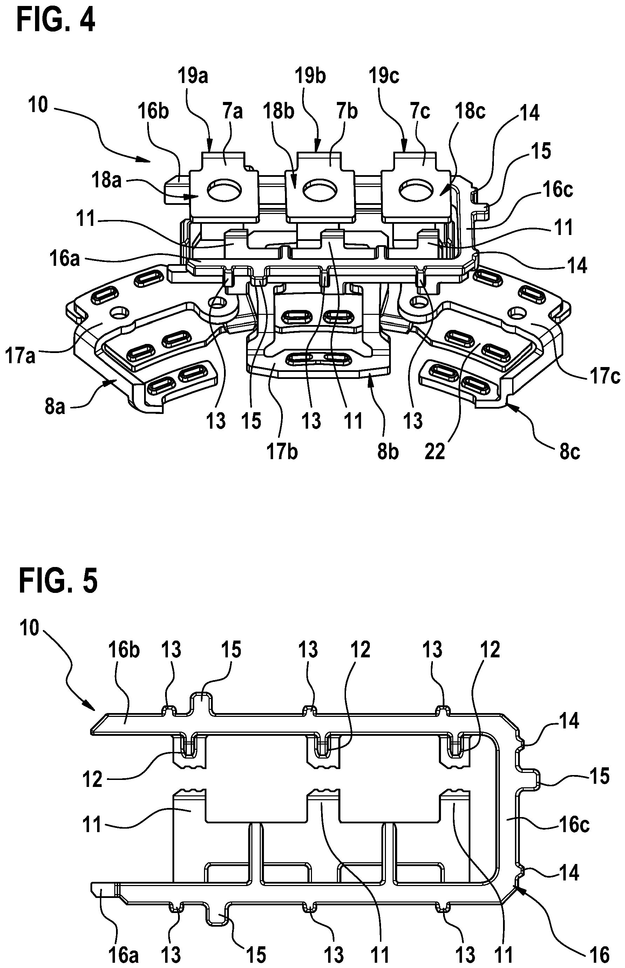

Figur 4 zeigt schematisch eine Detailansicht einzelner Komponenten der elektrischen Maschine 1. Dabei handelt es sich insbesondere um die Anschlusselemente 7a, 7b, 7c sowie um die Verbindungselemente 8a, 8b, 8c. Außerdem ist das Abstützteil 10 gezeigt. Darüber hinaus ist schematisch eine Haltestruktur 22 dargestellt. Die Haltestruktur 22 dient zum Aufstecken auf die Enden 6 der Phasenstränge 4a, 4b, 4c der Wicklung 3. Zusätzlich werden die Enden 6 durch die jeweiligen Leiterschienen 17a, 17b, 17c gesteckt. Dies führt einerseits zum Verschalten der Wicklung 3, andererseits zum elektrischen Kontaktieren der Verbindungselemente 8a, 8b, 8c, die Teil der Leiterschienen 17a, 17b, 17c sind, mit den Phasensträngen 4a, 4b, 4c.

Das Abstützteil 10 ist schematisch in Figur 5 dargestellt. Die Detailansicht aus Figur 3 zeigt schematisch das Zusammenwirken von Abstützteil 10 und Anschlusselementen 7a, 7b, 7c sowie Verbindungselementen 8a, 8b, 8c am Beispiel des zweiten Anschlusselements 7b und des zweiten Verbindungselements 8b.

Das Abstützteil 10 weist in dem gezeigten Ausführungsbeispiel einen Grundkörper 16 auf, wobei der Grundkörper 16 einen ersten Schenkel 16a, einen zweiten Schenkel 16b und einen dritten Schenkel 16c umfasst. Der dritte Schenkel 16c dient zum Verbinden von erstem Schenkel 16a und zweitem Schenkel 16b, wobei der erste Schenkel 16a und der zweite Schenkel 16b jeweils ein freies Ende aufweisen. Dadurch ist der Grundkörper 16 im Wesentlichen C-förmig ausgebildet.

Die Ausbildung des Grundkörpers in C-Form und/oder mit den genannten Schenkeln 16a, 16b, 16c ermöglicht eine einfache und zuverlässige Montage des Abstützteils 10 innerhalb der Öffnung 9. Der erste Schenkel 16a und der zweite Schenkel 16b lassen sich elastisch verformen, insbesondere auseinanderdrücken, um die Anschlusselemente 7a, 7b, 7c und/oder Verbindungselemente 8a, 8b, 8c in einen Bereich innerhalb des Grundkörpers 16 einzuführen. Mit anderen Worten umschließt der Grundkörper 16 die Anschlusselemente 7a, 7b, 7c und/oder Verbindungselemente 8a, 8b, 8c zumindest teilweise, in dem gezeigten Ausführungsbeispiel in drei Richtungen.

Von dem Grundkörper 16 erstrecken sich erste Stützkonturen 11, zweite Stützkonturen 12 und dritte Stützkonturen 13, sowie vierte Stützkonturen 14. Die ersten Stützkonturen 11 und zweiten Stützkonturen 12 dienen zum Abstützen der Anschlusselemente 7a, 7b, 7c und/oder Verbindungselemente 8a, 8b, 8c, wobei besagte Elemente zwischen der ersten Stützkontur 11 und der zweiten Stützkontur 12 eingeklemmt sind. Es ist vorgesehen, dass für jedes Anschlusselement 7a, 7b, 7c und/oder für jedes Verbindungselement 8a, 8b, 8c ein eigenes Paar von erster Stützkontur 11 und zweiter Stützkontur 12 vorgesehen ist. In dem gezeigten Ausführungsbeispiel sind somit aufgrund des Vorhandenseins von drei Anschlusselementen 7a, 7b, 7c sowie drei Verbindungselementen 8a, 8b, 8c drei Paare von erster Spitzkontur 11 und zweiter Spitzkontur 12 vorgesehen.

Die ersten Stützkonturen 11 und zweiten Stützkonturen 12 stehen mit dem jeweiligen Anschlusselement 7a, 7b, 7c und/oder Verbindungselement 8a, 8b, 8c bevorzugt in mehrfachem Linienkontakt, indem die Abstützkonturen eine wellenförmige und/oder sägezahnförmige Oberfläche aufweisen. Somit ist ein definierter Kontakt zwischen Abstützkontur 11, 12 und Anschlusselement 7a, 7b, 7c und/oder Verbindungselement 8a, 8b, 8c erreicht.

Die ersten Abstützkonturen 11 erstrecken sich von dem ersten Schenkel 16a nach innen, d.h., in den Bereich der von dem Grundkörper 16 zumindest teilweise umgeben ist. Außerdem erstrecken sich von dem ersten Schenkel 16a dritte Stützkonturen 13 nach außen, d.h., entgegengesetzt der Richtung der ersten Stützkonturen 11. An dem zweiten Schenkel 16b erstrecken sich die zweiten Stützkonturen 12 nach innen, wobei sich auch an den zweiten Schenkel 16b dritte Stützkonturen 13 nach außen erstrecken, und somit entgegen der Erstreckungsrichtung der zweiten Stützkonturen 12. Es ist vorgesehen, dass sich von dem ersten Schenkel 16a gleich viele erste Stützkonturen 11 und dritte Stützkonturen 13 erstrecken. Von dem zweiten Schenkel 16b erstrecken sich gleich viele zweite Stützkonturen 12 und dritte Stützkonturen 13.

Von dem dritten Schenkel 16c erstrecken sich vorteilhafterweise keine Stützkonturen nach innen. Es ist vorgesehen, dass sich von dem dritten Schenkel 16c vierte Stützkonturen 14 nach außen erstrecken. Die dritten Stützkonturen 13 und die vierten Stützkonturen 14 dienen den Abstützen des Grundkörpers 16 gegenüber dem Gehäuse 9. Es ist vorgesehen, dass die dritten Stützkonturen 13 und vierten Stützkonturen 14 in Richtung des Gehäuses 9 konisch zulaufend ausgebildet sind, um einen Linienkontakt zu dem Gehäuse 9 herzustellen. Somit ist auch hier eine definierte Auflage vorhanden. Das Abstützteil 10 ist damit optimal innerhalb der Öffnung 9 angeordnet und erlaubt ein Abstützen der Anschlusselemente 7a, 7b, 7c und/oder Verbindungselemente 8a, 8b, 8c gegenüber dem Gehäuse 5a, 5b. Das Abstützteil 10 ist bevorzugt in Axialrichtung 100 in die Öffnung 9 des Gehäuses 5a, 5b einsetzbar. Der Grundkörper 16 weist vorteilhafterweise mehrere Axialanschläge 15 auf, wobei durch die Axialanschläge 15 eine Endposition des Abstützteils 10 in der Öffnung 9 des Gehäuses 5a, 5b in Axialrichtung 100 definiert ist. Somit ist eine einfache und zuverlässige Montage des Abstützteils 10 erreicht.

Das Abstützteil 10 ist bevorzugt elektrisch isolierend ausgebildet. Somit ist ein Kurzschluss der einzelnen Phasenstränge 4a, 4b, 4c durch das Abstützteil 10 ausgeschlossen.

Das Abstützteil 10 ist beispielsweise aus einem Kunststoff hergestellt. Besonders vorteilhaft ist das Abstützteil 10 ein Spritzgussteil. Durch das Abstützteil 10 ist außerdem eine definierte Lage von Anschlusselement 7a, 7b, 7c und Verbindungselement 8a, 8b, 8c relativ zum Gehäuse 5a, 5b sichergestellt. Somit können eventuelle Zusatzbauteile zur Fixierung der Lage dieser Elemente relativ zum Gehäuse 5a, 5b entfallen.

## Patentansprüche

1. Elektrische Maschine (1) aufweisend
- einen Stator (2) mit einer mehrphasigen elektrischen Wicklung (3), die zumindest einen Phasenstrang (4a, 4b, 4c) aufweist,
- ein Gehäuse (5a, 5b), das eine Öffnung (9) zur Durchführung einer elektrischen Verbindung aufweist,
- zumindest ein elektrisch leitfähiges Anschlusselement (7a, 7b, 7c) ausgebildet zum Anschließen eines der Phasenstränge (4a, 4b, 4c) an eine Phase einer externen Energieversorgung, insbesondere eines Inverters, und
- zumindest ein elektrisch leitfähiges Verbindungselement (8a, 8b, 8c), das sich zwischen einem Ende (6) eines der Phasenstränge (4a, 4b, 4c) der Wicklung (3) und dem Anschlusselement (7a, 7b, 7c) erstreckt und den Phasenstrang (4a, 4b, 4c) mit dem Anschlusselement (7a, 7b, 7c) elektrisch verbindet,
- wobei das Anschlusselement (7a, 7b, 7c) elastisch ausgebildet ist, um einen Toleranzausgleich und/oder Bewegungsausgleich zwischen dem Stator (2) und dem Anschlusselement (7a, 7b, 7c) zu erreichen,
**dadurch gekennzeichnet, dass** das zumindest eine Anschlusselement (7a, 7b, 7c) und/oder das Verbindungselement (8a, 8b, 8c) mittels eines in der Öffnung (9) des Gehäuses (5a, 5b) angeordneten Abstützteils (10) schwingungsdämpfend abgestützt ist.

2. Elektrische Maschine (1) nach Anspruch 1, **dadurch gekennzeichnet, dass** das Abstützteil (10) zumindest eine erste Stützkontur (11) zur Abstützung des Anschlusselementes (7a, 7b, 7c) und/oder Verbindungselementes (8a, 8b, 8c) aufweist.

3. Elektrische Maschine (1) nach Anspruch 2, **dadurch gekennzeichnet, dass** das Abstützteil (10) zumindest eine zweite Stützkontur (12) zur Abstützung des Anschlusselementes (7a, 7b, 7c) und/oder Verbindungselementes aufweist, die gegenüberliegend der ersten Stützkontur (11) ausgebildet ist, wobei das Anschlusselement (7a, 7b, 7c) und/oder das Verbindungselement (8a, 8b, 8c)) zwischen der ersten Stützkontur (11) und der zweiten Stützkontur (12) angeordnet, insbesondere eingeklemmt, ist.

4. Elektrische Maschine (1) nach Anspruch 2 oder 3, **dadurch gekennzeichnet, dass** die erste Stützkontur (11) und/oder die zweite Stützkontur (12), insbesondere mittels einer Wellenform und/oder einer Sägezahnform, einen einfachen oder mehrfachen linienförmigen Kontakt zum Anschlusselement (7a, 7b, 7c) und/oder Verbindungselement (8a, 8b, 8c) aufweisen.

5. Elektrische Maschine (1) nach einem der Ansprüche 2 bis 4, **dadurch gekennzeichnet, dass** das Abstützteil (10) zumindest eine dritte Stützkontur (13) aufweist, die sich nach Außen erstreckt und an dem Gehäuse (5a, 5b) anliegt.

6. Elektrische Maschine (1) nach Anspruch 5, **dadurch gekennzeichnet, dass** jede dritte Stützkontur (11) einen Linienkontakt zu dem Gehäuse (5a, 5b) aufweist.

7. Elektrische Maschine (1) nach einem der vorhergehenden Ansprüche, **dadurch gekennzeichnet, dass** das Abstützteil (10) einen, insbesondere ringförmigen oder C-förmigen, Grundkörper (16) aufweist, der das Anschlusselement (7a, 7b, 7c) und/oder das Verbindungselement (8a, 8b, 8c) zumindest teilweise umgibt und insbesondere einen ersten Schenkel (16a), einen zweiten Schenkel (16b) und einen den ersten Schenkel (16a) und zweiten Schenkel (16b) verbindenden dritten Schenkel (16c) aufweist.

8. Elektrische Maschine (1) nach Anspruch 7, **dadurch gekennzeichnet, dass** an dem ersten Schenkel (16a) gleich viele erste Stützkontur (11) und dritte Stützkontur (13) angeordnet sind und/oder dass an dem zweiten Schenkel (16b) gleich viele zweite Stützkontur (12) und dritte Stützkontur (13) angeordnet sind.

9. Elektrische Maschine (1) nach Anspruch 7 oder 8, **dadurch gekennzeichnet, dass** das Abstützteil (10) zumindest eine vierte Stützkontur (14) aufweist, die sich von dem dritten Schenkel (16c) nach Außen erstreckt und, insbesondere über einen Linienkontakt, an dem Gehäuse (5a, 5b) anliegt.

10. Elektrische Maschine (1) nach einem der vorhergehenden Ansprüche, **dadurch gekennzeichnet, dass** das Abstützteil (10) entlang einer Axialrichtung (100) der elektrischen Maschine (1) in die Öffnung (9) des Gehäuses (5a, 5b) einsetzbar ist und mindestens einen Axialanschlag (15) aufweist, durch den in Axialrichtung (100) eine Endposition des Abstützteils (10) in dem Gehäuse (5a, 5b) definiert ist.

11. Elektrische Maschine (1) nach einem der vorhergehenden Ansprüche, **dadurch gekennzeichnet, dass** das Verbindungselement (8a, 8b, 8c) Teil einer Leiterschiene (17a, 17b, 17c) ist, die Leiterstränge der Wicklung (3) miteinander verschaltet.

12. Elektrische Maschine (1) nach einem der vorhergehenden Ansprüche, **dadurch gekennzeichnet, dass** das Abstützteil (10) elektrisch isolierend ausgebildet, insbesondere aus einem elektrisch isolierendem Material gefertigt, ist.

13. Elektrische Maschine (1) nach einem der vorhergehenden Ansprüche, **dadurch gekennzeichnet, dass** das Anschlusselement (7a, 7b, 7c) einen Kontaktabschnitt (18a, 18b, 18c) zur elektrischen Kontaktierung der Phase der externen Energieversorgung und einen Flexabschnitt (19a, 19b, 19c) zur elastischen Verbindung mit dem Verbindungselement (8a, 8b, 8c) aufweist, wobei der Flexabschnitt (19a, 19b, 19c) im Querschnitt insbesondere eine Vielzahl von Litzen oder eine Vielzahl von Lamellenbändern (20) umfasst, wobei der Kontaktabschnitt (18a, 18b, 18c) im Querschnitt insbesondere ein einzelnes Leiterband oder eine Vielzahl von Lamellenbändern (20) umfasst.
